# EUROPEAN PATENT APPLICATION

(11) **EP 4 744 951 A1**
(43) Date of publication of application: **20.05.2026**
(21) Application number: 25190210.2
(22) Date of filing: 17.07.2025
(51) Int. Cl.: B60L 53/66, B60L 53/68

(54) **CHARGING RESERVATION SYSTEM FOR VEHICLE**

(30) Priority: 13.11.2024 CN 202411615876
(71) Applicant: Guangxi Liugong Metathings Technology Co., Ltd., Liuzhou Guangxi 545000 (CN); Guangxi LiuGong Machinery Co., Ltd., Liuzhou Guangxi 545007 (CN)
(72) Inventor: LIU, Jinpei, LIUZHOU - GUANGXI, 545000 (CN); DONG, Lichao, LIUZHOU - GUANGXI, 545000 (CN); ZHAO, Ming, LIUZHOU - GUANGXI, 545000 (CN); TANG, Bin, LIUZHOU - GUANGXI, 545000 (CN); LI, Jianhua, LIUZHOU - GUANGXI, 545000 (CN)
(74) Representative: Cabinet Beaumont

(57) **Abstract**

A charging reservation system for a vehicle, includes a cloud platform terminal (110), a vehicle-mounted terminal (120) and a charging pile (130). The cloud platform terminal (110) is configured to, after receiving charging reservation information from a user, generate and send a first reservation instruction to the vehicle-mounted terminal (120). The vehicle-mounted terminal (120) is configured to: in response to receiving the first reservation instruction, check a state of the charging gun and a state of a battery of a target vehicle, generate and send a trickle charging command to the charging pile (130) after both the state of the charging gun and the state of the battery meet a preset standard. The charging pile (130) is configured to perform trickle charging on the target vehicle based on a trickle charging current in the trickle charging command when receiving the trickle charging command.

## Description

### TECHNICAL FIELD

The present invention relates to the field of new energy vehicles and, in particular, to a charging reservation system for a vehicle.

### BACKGROUND

With the global increasing emphasis on environmental protection and the adjustment of energy structure, electric vehicles, have been rapidly popularized in recent years as a green mode of transportation. To improve the use experience and reduce charging costs for electric vehicle users, the charging reservation function has been continuously developed and improved. Vehicle owners can conveniently set up charging reservations via mobile phone terminals, allowing them to charge during off-peak electricity pricing periods, thereby reducing overall expenses for users to a certain extent.

Currently, two main types of charging reservations are available on the market: alternating current charging reservation and direct current charging reservation. However, alternating current charging reservation becomes inadequate when applied to electric devices with a high electricity quantity such as commercial vehicles and engineering machines with a requirement for an electricity quantity of as high as 200-400 kWh or more. A general charging power of alternating current charging ranging from 7 KW to 11 kW, causes the charging time of such devices with a high electricity quantity to be as long as tens of hours, making it difficult to meet the actual requirement. Although direct current charging reservation theoretically better deals with fast charging requirements of devices with a high electricity quantity, at present, direct current charging reservation mainly exists through the setting of a charging reservation function at a direct current pile. However, the reality is that the vast majority of direct current charging piles on the market do not support the direct current charging reservation function. Moreover, the purchase and installation costs of the direct current pile are prohibitively high, typically ranging from RMB 40,000 to 50,000, resulting in an extremely rare situation of a private DC pile. As a result, electric vehicle owners, especially those users owning electric devices with a high electricity quantity, often cannot make use of the charging reservation function during off-peak hours at direct current charging piles, resulting in persistently high charging costs.

In addition, due to differences in charging standards across different countries, the corresponding charging control logics for different countries also varies. As a result, existing charging reservation methods on the market are difficult to apply universally across different countries, and different versions of control methods for different countries need to be developed. This further leads to a failure in achieving the vehicle charging reservation in terms of direct current charging of the related art.

### SUMMARY

The present invention provides a charging reservation system for a vehicle, which can solve the problem of poor user experience and high costs caused by an existing charging reservation system for a vehicle and a failure in vehicle charging reservation in a direct current state.

In a first aspect, embodiments of the present invention provide a charging reservation system for a vehicle. The system includes a cloud platform terminal, a vehicle-mounted terminal, and a charging pile.

The cloud platform terminal is communicatively connected to the vehicle-mounted terminal, and the vehicle-mounted terminal is connected to the charging pile via a charging gun by means of a wired connection.

The cloud platform terminal is configured to: after receiving charging reservation information sent by a user and determining that a current time point is later than a first reservation time point in the charging reservation information, generate a first reservation instruction and send the first reservation instruction to the vehicle-mounted terminal.

The vehicle-mounted terminal is configured to: in response to receiving the first reservation instruction, check a state of the charging gun and a state of a battery of a target vehicle, generate a trickle charging command after both the state of the charging gun and the state of the battery meet a preset standard, and send the trickle charging command to the charging pile.

The charging pile is configured to perform trickle charging on the target vehicle based on a trickle charging current in the trickle charging command when receiving the trickle charging command.

The cloud platform terminal is further configured to: determine whether a receiving time of the charging reservation information is earlier than the first reservation time point in the charging reservation information before generating the first reservation instruction according to the current time point and the first reservation time point in the charging reservation information; if the receiving time of the charging reservation information is earlier than the first reservation time point in the charging reservation information, generate a reservation success instruction and send the reservation success instruction to the user; if the receiving time of the charging reservation information is not earlier than the first reservation time point in the charging reservation information, generate a reservation failure instruction and send the reservation failure instruction to the user, and refuse to generate the first reservation instruction.

Further, the cloud platform terminal is further configured to: continuously monitor the current time point, and generate a second reservation instruction and send the second reservation instruction to the vehicle-mounted terminal after detecting that the current time point reaches a second reservation time point in the charging reservation information.

The vehicle-mounted terminal is further configured to: in response to receiving the second reservation instruction, check the state of the charging gun and the state of the battery of the target vehicle, generate a charging start command after both the state of the charging gun and the state of the battery meet the preset standard, and send the charging start command to the charging pile.

The charging pile is further configured to: perform a charging operation on the target vehicle according to a preset maximum charging current when receiving the charging start command. The vehicle-mounted terminal is further configured to: monitor the state of the battery of the target vehicle in real time after generating the charging start command, generate a charging end instruction when monitoring that the state of the battery is a fully charged state, and send the charging end instruction to the charging pile so that the charging pile terminates the charging operation in response to the charging end instruction.

Further, the vehicle-mounted terminal specifically includes a vehicular communication unit, a vehicle controller, and a battery management unit that are connected in order. The vehicular communication unit is configured to receive the first reservation instruction sent by the cloud platform terminal and send the first reservation instruction to the vehicle controller. The vehicle controller is configured to: in response to receiving the first reservation instruction, check the state of the charging gun and the state of the battery of the target vehicle, generate a first reservation flag bit according to a detection result, and send the first reservation flag bit to the battery management unit. The battery management unit is configured to generate the trickle charging command according to the preset trickle charging current and send the trickle charging command to the charging pile after receiving the first reservation flag bit.

The vehicular communication unit is further configured to: receive the second reservation instruction sent by the cloud platform terminal and send the second reservation instruction to the vehicle controller. The vehicle controller is further configured to: in response to receiving the second reservation instruction, check the state of the charging gun and the state of the battery of the target vehicle, generate a second reservation flag bit according to a detection result, and send the second reservation flag bit to the battery management unit. The battery management unit is further configured to: generate the charging start command according to the preset maximum charging current and send the charging start command to the charging pile after receiving the second reservation flag bit, monitor the state of the battery of the target vehicle in real time, generate the charging end instruction when monitoring that the state of the battery is the fully charged state, and send the charging end instruction to the vehicular communication unit. The vehicular communication unit is configured to send the received charging end instruction to the charging pile.

Optionally, the cloud platform terminal is further configured to: generate a second reservation instruction and send the second reservation instruction to the vehicle-mounted terminal in response to reservation cancellation information sent by the user.

Further, the vehicle controller specifically includes a charging gun state detection unit, an electricity quantity detection unit, and a command generation unit. The charging gun state detection unit is configured to detect whether the state of the charging gun of the target vehicle is a connected state. The electricity quantity detection unit is configured to detect whether an electricity quantity of the battery of the target vehicle is lower than a preset charging threshold. The command generation unit is configured to generate the first reservation flag bit or the second reservation flag bit according to the current time point when detecting that the state of the charging gun is the connected state and the electricity quantity of the battery is lower than the preset charging threshold.

Specifically, the cloud platform terminal is further configured to: in response to a charging command sent by the user, generate a second reservation instruction and send the second reservation instruction to the vehicle-mounted terminal after detecting that the current time point is earlier than the first reservation time point in the charging reservation information.

In the technical solution of the embodiments of the present invention, the cloud platform terminal, after receiving the charging reservation information sent by the user and confirming that the current time point is later than the first reservation time point in the charging reservation information, generates the first reservation instruction and sends the first reservation instruction to the vehicle-mounted terminal; then, the vehicle-mounted terminal checks the state of the charging gun and the state of the battery of the target vehicle in response to the received first reservation instruction, and generates the trickle charging command and sends the trickle charging command to the charging pile after both the state of the charging gun and the state of the battery meet the preset standard; finally, the charging pile performs the trickle charging on the target vehicle based on the trickle charging current in the trickle charging command when receiving the trickle charging command. This solution effectively addresses the problem of high costs and poor user experience caused by the existing charging reservation system for the vehicle and the failure in the vehicle charging reservation in the direct current state, thereby achieving the vehicle charging reservation of the direct current charging pile, reducing the users' charging cost and improving their charging experience.

It is to be understood that the content described in this part is neither intended to identify key or important features of embodiments of the present invention nor intended to limit the scope of the present invention. Other features of the present invention are apparent from the description provided hereinafter.

### BRIEF DESCRIPTION OF DRAWINGS

To illustrate solutions of embodiments of the present invention more clearly, drawings used in description of embodiments of the present invention are described hereinafter. Apparently, these drawings illustrate part of embodiments of the present invention. Those of ordinary skill in the art may obtain other drawings based on these drawings on the premise that no creative work is done.
FIG. 1 is a structure diagram of a charging reservation system for a vehicle according to embodiment one of the present invention.
FIG. 2 is a structure diagram of a charging reservation system for a vehicle according to embodiment two of the present invention.

### DETAILED DESCRIPTION

For a better understanding of solutions of the present invention by those skilled in the art, solutions in embodiments of the present invention are described clearly and completely hereinafter in conjunction with the drawings in embodiments of the present invention. Apparently, the embodiments described hereinafter are part, not all, of embodiments of the present invention. Based on embodiments of the present invention, all other embodiments obtained by those of ordinary skill in the art on the premise that no creative work is done are within the scope of the present invention.

It is to be noted that the terms "first", "second" and the like in the description, claims and drawings of the present invention are used to distinguish between similar objects and are not necessarily used to describe a particular order or sequence. It is to be understood that the data used in this way is interchangeable where appropriate so that embodiments of the present invention described herein may also be implemented in a sequence not illustrated or described herein. Additionally, terms "include", "have" and any variations thereof are intended to encompass a non-exclusive inclusion. For example, a process, method, system, product, or device that includes a series of steps or modules not only includes the expressly listed steps or modules but may also include other steps or modules that are not expressly listed or are inherent to such process, method, product, or device.

### Embodiment one

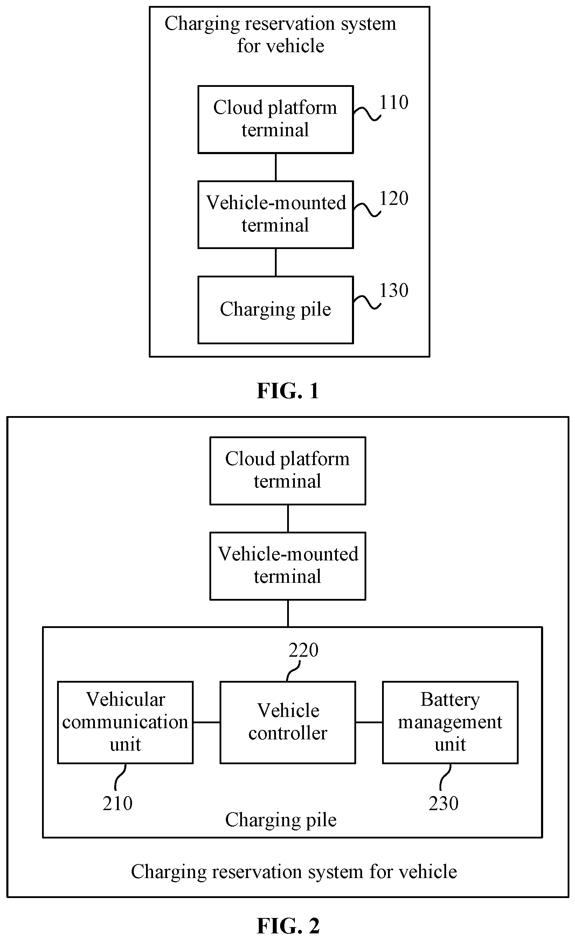

FIG. 1 is a structure diagram of a charging reservation system for a vehicle according to the embodiment one of the present invention. This embodiment may be applicable to reserving a vehicle charging operation at a direct current charging pile.

As shown in FIG. 1, the system includes a cloud platform terminal 110, a vehicle-mounted terminal 120, and a charging pile 130.

The cloud platform terminal 110 is communicatively connected to the vehicle-mounted terminal 120, and the vehicle-mounted terminal 120 is connected to the charging pile 130 via a charging gun by means of a wired connection.

In this embodiment, the charging pile 130 may be specifically a vehicle charging apparatus capable of providing a direct current charging service for a vehicle.

The cloud platform terminal 110 is configured to, after receiving charging reservation information sent by a user and determining that a current time point is later than a first reservation time point in the charging reservation information, generate a first reservation instruction and send the first reservation instruction to the vehicle-mounted terminal 120.

For example, the cloud platform terminal 110 is configured to accurately compare and confirm the current time point with the first reservation time point set in the charging reservation information after receiving the charging reservation information sent by the user through a relevant channel (for example, a mobile phone APP or a webpage). The charging reservation information here refers to a detailed content set by the user, including a specific time at which charging is expected to start, a charging duration and a charging electricity quantity. Specific set content may be set by a developer according to an actual implementation scenario and is not limited in this embodiment. The first reservation time point is a start time at which the user expects to start performing a charging reservation process. It is to be noted that only when the prerequisite of confirming that the current time point is indeed later than the first reservation time point clearly specified in the charging reservation information is met, the cloud platform terminal 110 generates the first reservation instruction and accurately sends the first reservation instruction to the vehicle-mounted terminal 120 in a preset communication manner (for example, a 5G network or Bluetooth) to start the subsequent charging reservation process.

Further, the cloud platform terminal 110 is further configured to: determine whether a receiving time of the charging reservation information is earlier than the first reservation time point in the charging reservation information before generating the first reservation instruction according to the current time point and the first reservation time point in the charging reservation information; if the receiving time of the charging reservation information is earlier than the first reservation time point in the charging reservation information, generate a reservation success instruction and send the reservation success instruction to the user; if the receiving time of the charging reservation information is not earlier than the first reservation time point in the charging reservation information, generate a reservation failure instruction and send the reservation failure instruction to the user, and refuse to generate the first reservation instruction.

For example, before generating the first reservation instruction according to the current time point and the first reservation time point in the charging reservation information, the cloud platform terminal 110 determines whether the receiving time of the charging reservation information is earlier than the first reservation time point in the charging reservation information. The charging reservation information includes a series of detailed contents such as a specific moment when the user expects to start charging (for example, 10 p.m.), an estimated charging duration (for example, 3 hours) and an expected charging electricity quantity (for example, 80%). If it is determined that the receiving time of the charging reservation information is earlier than the first reservation time point, the cloud platform terminal 110 quickly generates the reservation success instruction and timely sends the reservation success instruction to notify the user that the reservation has been successful. However, if it is determined that the receiving time of the charging reservation information is later than the first reservation time point, the cloud platform terminal 110 generates the reservation failure instruction and also sends the reservation failure instruction to the user, and refuses to generate the first reservation instruction, which means that the reservation of the user this time fails to meet the condition set by the system and the charging reservation operation cannot be performed as expected.

Further, the cloud platform terminal 110 is further configured to: continuously monitor the current time point, and generate a second reservation instruction and send the second reservation instruction to the vehicle-mounted terminal 120 after detecting that the current time point reaches a second reservation time point in the charging reservation information.

Optionally, the cloud platform terminal 110 is further configured to: generate a second reservation instruction and send the second reservation instruction to the vehicle-mounted terminal 120 in response to reservation cancellation information sent by the user.

Optionally, the cloud platform terminal 110 is further configured to: in response to a charging command sent by the user, generate a second reservation instruction and send the second reservation instruction to the vehicle-mounted terminal 120 after detecting that the current time point is earlier than the first reservation time point in the charging reservation information.

Specifically, the cloud platform terminal 110 further has the functions described below. In a first aspect, the cloud platform terminal 110 continuously monitors the current time point. Moreover, the cloud platform terminal 110 immediately generates the second reservation instruction and sends the second reservation instruction to the vehicle-mounted terminal 120 once detecting that the current time point reaches the second reservation time point set in the charging reservation information. The second reservation time point is a time point set by the user to start charging the vehicle formally. In a second aspect, the cloud platform terminal 110 is further configured to quickly generate the second reservation instruction and send the second reservation instruction to the vehicle-mounted terminal 120 after receiving the reservation cancellation information sent by the user through a channel such as a mobile phone APP or a webpage. The reservation cancellation information refers to a request actively initiated by the user to cancel the charging reservation due to a change in itinerary or the like. In a third aspect, the cloud platform terminal 110 is also configured to generate the second reservation instruction and send the second reservation instruction to the vehicle-mounted terminal 120 if detecting that the current time point is earlier than the first reservation time point in the charging reservation information in response to the charging command sent by the user through an in-vehicle button or a mobile phone APP. The charging command is an instruction delivered by the user to start charging immediately.

The vehicle-mounted terminal 120 is configured to: in response to receiving the first reservation instruction, check a state of the charging gun and a state of a battery of a target vehicle, generate a trickle charging command after both the state of the charging gun and the state of the battery meet a preset standard, and send the trickle charging command to the charging pile 130.

Specifically, the vehicle-mounted terminal 120 comprehensively and carefully checks the state of the charging gun and the state of the battery of the target vehicle in response to the received first reservation instruction. The state of the charging gun here refers to whether a connection between the charging gun and a vehicle charging interface is stable, such as whether there is a situation such as loosing or a poor contact between the charging gun and the vehicle charging interface. The state of the battery includes aspects such as the remaining electricity quantity of the battery, the temperature of the battery and the health of the battery. The preset standard, for example, stipulates that the charging gun is firmly connected with no signs of loosening, the remaining electricity quantity of the battery is lower than a certain threshold, the temperature of the battery is within a safe range and the health of the battery is good. Further, the vehicle-mounted terminal 120 generates the trickle charging command and accurately sends the trickle charging command to the charging pile 130 in a wired communication manner after determining that both the state of the charging gun and the state of the battery meet the preset standard through the check. Trickle charging is a manner of slowly charging the battery with a relatively small current, for example, charging the battery with a current ranging from 1 A to 2 A. Those related in the art should understand that if there is no electricity quantity output all the time, the direct current charging pile 130 automatically enters a sleep state due to characteristics of the direct current charging pile 130. In this implementation, the setting of trickle charging avoids the situation that the direct current charging pile 130 goes to sleep due to no current output for a long time. It is to be noted that the trickle charging current requires to be preset to a very small value to ensure that the electricity quantity supplemented to the battery does not exceed 5% within a reservation time.

The vehicle-mounted terminal 120 is further configured to: in response to receiving the second reservation instruction, check the state of the charging gun and the state of the battery of the target vehicle, generate a charging start command after both the state of the charging gun and the state of the battery meet the preset standard, and send the charging start command to the charging pile 130.

In this embodiment, for example, the vehicle-mounted terminal 120 quickly and carefully checks the state of the charging gun and the state of the battery of the target vehicle in response to the received second reservation instruction. The state of the charging gun mentioned here specifically refers to whether the physical connection between the charging gun and the vehicle charging interface is tight and stable, such as whether there is an abnormal situation such as loosening, falling off or a poor contact between the charging gun and the vehicle charging interface. The state of the battery covers multiple key aspects such as the remaining electricity quantity value of the battery (for example, remaining 20% of the electricity quantity), the current temperature of the battery (for example, 30 degrees Celsius) and the health of the battery (for example, indicators reflecting the health such as the number of cycles and internal resistance of the battery). The preset standard, for example, clearly stipulates that the charging gun is tightly and firmly connected without any signs of loosening, the remaining electricity quantity of the battery is lower than a particular threshold (for example, 30%), the temperature of the battery is within a safe range (for example, 0-50 degrees Celsius) and the health of the battery is good (for example, the number of cycles of the battery does not exceed a specified upper limit, and the internal resistance of the battery is within a normal range). After the careful and strict check, when it is determined that both the state of the charging gun and the state of the battery fully meet the preset standard, the vehicle-mounted terminal 120 generates the charging start command and timely sends the charging start command to the charging pile 130 in a stable and efficient communication manner.

The charging pile 130 is configured to perform trickle charging on the target vehicle based on a trickle charging current in the trickle charging command when receiving the trickle charging command.

Further, the charging pile 130 is further configured to: perform a charging operation on the target vehicle according to a preset maximum charging current when receiving the charging start command. The vehicle-mounted terminal 120 is further configured to: monitor the state of the battery of the target vehicle in real time after generating the charging start command, generate a charging end instruction when monitoring that the state of the battery is a fully charged state, and send the charging end instruction to the charging pile 130 so that the charging pile 130 terminates the charging operation in response to the charging end instruction.

Specifically, the charging pile 130 performs the charging operation on the target vehicle according to the preset maximum charging current strictly when receiving the charging start command. The preset maximum charging current mentioned here may be an upper limit value of the current set according to a specification of the battery of the vehicle and a capability of the charging device, for example, 30 A. The maximum charging current allows to increase a charging speed as much as possible on the premise of ensuring charging safety. Further, the vehicle-mounted terminal 120 is further configured to: monitor the state of the battery of the target vehicle in real time through a built-in sensor and a related monitoring device after generating the charging start command. The battery state here includes a real-time electricity quantity level of the battery (for example, charged to 80%), a temperature change inside the battery (for example, rising from 25 degrees Celsius to 35 degrees Celsius) and a voltage of the battery. Moreover, the vehicle-mounted terminal 120 generates the charging end instruction and sends the charging end instruction to the charging pile 130 when monitoring that the state of the battery reaches the fully charged state. The fully charged state can be determined according to a fact that the electricity quantity of the battery reaches 100% of a rated capacity of the battery or a fact that the voltage of the battery reaches a particular upper limit value. After receiving the charging end instruction, the charging pile 130 immediately responds and terminates the current charging operation to avoid damage to the battery caused by overcharging.

In the technical solution of the embodiments of the present invention, the cloud platform terminal, after receiving the charging reservation information sent by the user and confirming that the current time point is later than the first reservation time point in the charging reservation information, generates the first reservation instruction and sends the first reservation instruction to the vehicle-mounted terminal; then, in response to the received first reservation instruction, the vehicle-mounted terminal checks the state of the charging gun and the state of the battery of the target vehicle, and generates the trickle charging command and sends the trickle charging command to the charging pile after both the state of the charging gun and the state of the battery meet the preset standard; finally, the charging pile performs the trickle charging on the target vehicle based on the trickle charging current in the trickle charging command when receiving the trickle charging command, thereby achieving the vehicle charging reservation of the direct current charging pile, reducing the users' charging cost and improving their charging experience.

### Embodiment two

FIG. 2 is a structure diagram of a charging reservation system for a vehicle according to the embodiment two of the present invention. This embodiment may be applicable to reserving a vehicle charging operation at a direct current charging pile.

As shown in FIG. 2, the system includes a cloud platform terminal, a vehicle-mounted terminal, and a charging pile.

The vehicle-mounted terminal specifically includes a vehicular communication unit 210, a vehicle controller 220, and a battery management unit 230 that are connected in order.

The vehicular communication unit 210 is configured to receive the first reservation instruction sent by the cloud platform terminal and send the first reservation instruction to the vehicle controller 220.

The vehicular communication unit 210 is further configured to: receive the second reservation instruction sent by the cloud platform terminal and send the second reservation instruction to the vehicle controller 220. The vehicle controller 220 is further configured to: in response to receiving the second reservation instruction, check the state of the charging gun and the state of the battery of the target vehicle, generate a second reservation flag bit according to a detection result, and send the second reservation flag bit to the battery management unit 230. The battery management unit 230 is further configured to generate the charging start command according to the preset maximum charging current and send the charging start command to the charging pile after receiving the second reservation flag bit, monitor the state of the battery of the target vehicle in real time, generate the charging end instruction when monitoring that the state of the battery is the fully charged state, and send the charging end instruction to the vehicular communication unit 210. The vehicular communication unit 210 is configured to send the received charging end instruction to the charging pile.

The vehicular communication unit 210 is a module responsible for communicating and interacting with the outside. For example, a connection is established with the cloud platform terminal in a manner such as Bluetooth or a wireless network. The main function of the vehicular communication unit 210 is to receive the first reservation instruction sent by the cloud platform terminal and accurately send the first reservation instruction to the vehicle controller 220. Further, the vehicular communication unit 210 is also configured to receive the second reservation instruction sent by the cloud platform terminal and transmit the second reservation instruction to the vehicle controller 220. The vehicle controller 220 is a core control unit of the vehicle-mounted terminal. The vehicle controller 220 comprehensively detects the state of the charging gun and the state of the battery of the target vehicle when receiving the second reservation instruction. The state of the charging gun includes whether the charging gun is firmly connected and damaged. The state of the battery covers the aspects such as the remaining electricity quantity of the battery, the temperature of the battery, and the health of the battery. Then, the vehicle controller 220 generates the second reservation flag bit according to the detection result and sends the second reservation flag bit to the battery management unit 230.

Further, the battery management unit 230 is mainly responsible for managing and monitoring the charging and discharging of the battery. The battery management unit 230 generates the trickle charging command according to the preset trickle charging current and sends the trickle charging command to the charging pile after receiving the first reservation flag bit, and generates the charging start command according to the preset maximum charging current, for example, a current of 50 A set according to the specification and safe charging requirement of the battery of the vehicle, and sends the charging start command to the charging pile after receiving the second reservation flag bit. Moreover, the battery management unit 230 monitors the state of the battery of the target vehicle in real time. For example, data such as the electricity quantity and temperature of the battery is acquired once every second. The battery management unit 230 generates the charging end instruction and sends the charging end instruction to the vehicular communication unit 210 once monitoring that the state of the battery is the fully charged state, that is, the electricity quantity of the battery reaches 100% of the rated capacity of the battery or the voltage of the battery reaches the preset upper limit value. Finally, the vehicular communication unit 210 timely sends the received charging end instruction to the charging pile, thereby controlling the charging pile to terminate the charging operation.

The vehicle controller 220 is configured to: in response to receiving the first reservation instruction, detect the state of the charging gun and the state of the battery of the target vehicle, generate a first reservation flag bit according to a detection result, and send the first reservation flag bit to the battery management unit 230.

Further, the vehicle controller 220 specifically includes a charging gun state detection unit, an electricity quantity detection unit and a command generation unit. The charging gun state detection unit is configured to detect whether the state of the charging gun of the target vehicle is a connected state. The electricity quantity detection unit is configured to detect whether an electricity quantity of the battery of the target vehicle is lower than a preset charging threshold. The command generation unit is configured to generate the first reservation flag bit or the second reservation flag bit according to the current time point when detecting that the state of the charging gun is the connected state and the electricity quantity of the battery is lower than the preset charging threshold.

Specifically, the function of the vehicle controller 220 is to comprehensively and accurately detect the state of the charging gun and the state of the battery of the target vehicle through an internal detection mechanism in response to the received first reservation instruction. The vehicle controller 220 specifically includes the charging gun state detection unit specifically responsible for detecting whether the state of the charging gun of the target vehicle is the connected state, for example, detecting whether the physical connection between the charging gun and the vehicle charging interface is tight and whether a connector is completely inserted through a sensor. It is to be noted that the method for detecting the state of the charging gun through the vehicle controller 220 is a mature existing technology, and the principle of the method is not repeated here in this embodiment. Further, the electricity quantity detection unit is configured to detect whether the electricity quantity of the battery of the target vehicle is lower than the preset charging threshold. The preset charging threshold may be a value set according to the characteristics of the battery of the vehicle and the requirement of the user. For example, the electricity quantity of the battery is lower than 20%. The command generation unit plays a role when detecting that the state of the charging gun is the connected state and the electricity quantity of the battery is lower than the preset charging threshold. The command generation unit generates the first reservation flag bit or the second reservation flag bit according to the current time point. For example, if the current time is 10 p.m. and a charging reservation time set by the user is 11 p.m., the first reservation flag bit is generated when it is detected that 11 p.m. has been reached; if the current time has exceeded the charging reservation time set by the user, the second reservation flag bit is generated. These flag bits are sent to the battery management unit 230 to trigger subsequent corresponding charging operations.

In the technical solution of the embodiments of the present invention, the cloud platform terminal, after receiving the charging reservation information sent by the user and confirming that the current time point is later than the first reservation time point in the charging reservation information, generates the first reservation instruction and sends the first reservation instruction to the vehicle-mounted terminal; then, in response to the received first reservation instruction, the vehicle-mounted terminal checks the state of the charging gun and the state of the battery of the target vehicle, generates the trickle charging command after both the state of the charging gun and the state of the battery meet the preset standard, and sends the trickle charging command to the charging pile; finally, the charging pile performs the trickle charging on the target vehicle based on the trickle charging current in the trickle charging command when receiving the trickle charging command, thereby achieving the vehicle charging reservation of the direct current charging pile, reducing the users' charging cost and improving their charging experience.

It is to be understood that various forms of the preceding flows may be used with steps reordered, added, or deleted. For example, the steps described in the present invention may be performed in parallel, in sequence, or in a different order as long as the desired result of the technical solutions provided in the present invention can be achieved. The execution sequence of these steps is not limited herein.

## Claims

1. A charging reservation system for a vehicle, comprising: a cloud platform terminal (110), a vehicle-mounted terminal (120), and a charging pile (130);
wherein the cloud platform terminal (110) is communicatively connected to the vehicle-mounted terminal (120), and the vehicle-mounted terminal (120) is connected to the charging pile (130) via a charging gun by means of a wired connection;
the cloud platform terminal (110) is configured to: after receiving charging reservation information sent by a user and determining that a current time point is later than a first reservation time point in the charging reservation information, generate a first reservation instruction and send the first reservation instruction to the vehicle-mounted terminal (120);
the vehicle-mounted terminal (120) is configured to: in response to receiving the first reservation instruction, check a state of the charging gun and a state of a battery of a target vehicle, generate a trickle charging command after both the state of the charging gun and the state of the battery meet a preset standard, and send the trickle charging command to the charging pile (130); and
the charging pile (130) is configured to perform trickle charging on the target vehicle based on a trickle charging current in the trickle charging command when receiving the trickle charging command.

2. The system according to claim 1, wherein the cloud platform terminal (110) is further configured to:
determine whether a receiving time of the charging reservation information is earlier than the first reservation time point in the charging reservation information before generating the first reservation instruction according to the current time point and the first reservation time point in the charging reservation information;
if the receiving time of the charging reservation information is earlier than the first reservation time point in the charging reservation information, generate a reservation success instruction and send the reservation success instruction to the user; and
if the receiving time of the charging reservation information is not earlier than the first reservation time point in the charging reservation information, generate a reservation failure instruction and send the reservation failure instruction to the user, and refuse to generate the first reservation instruction.

3. The system according to claim 1, wherein the cloud platform terminal (110) is further configured to:
continuously monitor the current time point, and generate a second reservation instruction and send the second reservation instruction to the vehicle-mounted terminal (120) after detecting that the current time point reaches a second reservation time point in the charging reservation information.

4. The system according to claim 3, wherein the vehicle-mounted terminal (120) is further configured to: in response to receiving the second reservation instruction, check the state of the charging gun and the state of the battery of the target vehicle, generate a charging start command after both the state of the charging gun and the state of the battery meet the preset standard, and send the charging start command to the charging pile (130).

5. The system according to claim 3 or 4, wherein the charging pile (130) is further configured to:
perform a charging operation on the target vehicle according to a preset maximum charging current when receiving the charging start command; and
the vehicle-mounted terminal (120) is further configured to: monitor the state of the battery of the target vehicle in real time after generating the charging start command, generate a charging end instruction when monitoring that the state of the battery is a fully charged state, and send the charging end instruction to the charging pile (130) so that the charging pile terminates the charging operation in response to the charging end instruction.

6. The system according to claim 1, wherein the vehicle-mounted terminal (120) specifically comprises a vehicular communication unit (210), a vehicle controller (220), and a battery management unit (230) that are connected in order;
the vehicular communication unit (210) is configured to: receive the first reservation instruction sent by the cloud platform terminal (110) and send the first reservation instruction to the vehicle controller (220);
the vehicle controller (220) is configured to: in response to receiving the first reservation instruction, check the state of the charging gun and the state of the battery of the target vehicle, generate a first reservation flag bit according to a detection result, and send the first reservation flag bit to the battery management unit (230); and
the battery management unit (230) is configured to: generate the trickle charging command according to the preset trickle charging current and send the trickle charging command to the charging pile (130) after receiving the first reservation flag bit.

7. The system according to any one of claims 4 to 6, wherein the vehicular communication unit (210) is further configured to: receive the second reservation instruction sent by the cloud platform terminal (110) and send the second reservation instruction to the vehicle controller (220);
the vehicle controller (220) is further configured to: in response to receiving the second reservation instruction, check the state of the charging gun and the state of the battery of the target vehicle, generate a second reservation flag bit according to a detection result, and send the second reservation flag bit to the battery management unit (230);
the battery management unit (230) is further configured to: generate the charging start command according to the preset maximum charging current and send the charging start command to the charging pile (139) after receiving the second reservation flag bit, monitor the state of the battery of the target vehicle in real time, generate the charging end instruction when monitoring that the state of the battery is the fully charged state, and send the charging end instruction to the vehicular communication unit (210); and
the vehicular communication unit (210) is configured to: send the received charging end instruction to the charging pile (130).

8. The system according to claim 1, wherein the cloud platform terminal (110) is further configured to:
generate a second reservation instruction and send the second reservation instruction to the vehicle-mounted terminal (120) in response to reservation cancellation information sent by the user.

9. The system according to claim 6 or 7, wherein the vehicle controller (220) specifically comprises:
a charging gun state detection unit configured to detect whether the state of the charging gun of the target vehicle is a connected state;
an electricity quantity detection unit configured to detect whether an electricity quantity of the battery of the target vehicle is lower than a preset charging threshold; and
a command generation unit configured to generate the first reservation flag bit or the second reservation flag bit according to the current time point when detecting that the state of the charging gun is the connected state and the electricity quantity of the battery is lower than the preset charging threshold.

10. The system according to claim 1, wherein the cloud platform terminal (110) is further configured to:
in response to a charging command sent by the user, generate a second reservation instruction and send the second reservation instruction to the vehicle-mounted terminal (120) after detecting that the current time point is earlier than the first reservation time point in the charging reservation information.

11. The system according to any one of claims 1 to 10, wherein the charging reservation information includes a specific time at which charging is expected to start, a charging duration, and a charging electricity quantity.

12. The system according to any one of claims 1 to 11, wherein the first reservation time point is a start time at which the user expects to start performing a charging reservation process.

13. The system according to any one of claims 3 to 5, 7, and 9, wherein the second reservation time point is a time point set by the user to start charging the vehicle formally.

14. The system according to any one of claims 1 to 13, wherein the preset standard includes that the charging gun is firmly connected with no signs of loosening, the remaining electricity quantity of the battery is lower than a certain threshold, the temperature of the battery is within a safe range and the health of the battery is good.

15. The system according to any one of claims 1 to 14, wherein the state of the charging gun refers to whether a connection between the charging gun and a vehicle charging interface is stable, and the state of the battery includes a remaining electricity quantity of the battery, a temperature of the battery and a health of the battery.
